# EUROPEAN PATENT APPLICATION

(11) **EP 4 477 563 A1**
(43) Date of publication of application: **18.12.2024**
(21) Application number: 23275090.1
(22) Date of filing: 16.06.2023
(51) Int. Cl.: B64U 70/93, B64U 70/95, B64F 1/00

(54) **LANDING PLATFORM ASSEMBLY, LANDING SYSTEM, VEHICLE, FLOAT ARRANGEMENT, AERIAL VEHICLE AND ASSOCIATED SYSTEMS AND METHODS**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

According to the present disclosure, there is provided a landing platform assembly (100) for landing an aerial vehicle (200) at a target location at which the landing platform assembly is providable, the landing platform assembly comprising: a platform (110); an actuator arrangement (120) connected to the platform and configured to adjust the orientation of the platform; and a processor (130) configured to: receive orientation information from the aerial vehicle during a landing procedure; and operate the actuator arrangement to adjust the orientation of the platform based on the received orientation information from the aerial vehicle.

## Description

### FIELD

The present disclosure relates to a landing platform assembly, in particular, to a landing platform assembly for landing an aerial vehicle thereon. The present disclosure further relates to a landing system, in particular, to a landing system for landing an aerial vehicle at a target location. The present disclosure further relates to associated vehicles, float arrangements, aerial vehicles, systems, and methods.

### BACKGROUND

Landing an aerial vehicle is a complex procedure. It is particularly complex to land an aerial vehicle at a moving landing site. The landing procedure presents a risk of damage and/or loss of the aerial vehicle.

Landing platforms can be provided at a target location. The aerial vehicle aims to land on the landing platform. Some existing landing platforms can be configured to maintain a horizontal orientation. In this way, despite movement of an object on which the landing platform is provided, the landing platform can maintain a horizontal orientation which may simplify the landing procedure. However, during the landing procedure, it may not be possible for the aerial vehicle to maintain horizontal during approach or landing. This may be due to environmental conditions, such as gusts of wind, or due to other factors. Furthermore, a horizontal orientation of the platform may not be optimal for the landing procedure.

Heave is the vertical motion or displacement of an object. In a nautical context, heave is the vertical motion or displacement of a watercraft, float, or any other water-based object, and may be induced by rough sea states. Heave presents a danger to an aerial vehicle as it approaches the object to land thereon. In some instances involving unmanned aerial vehicles (UAVs), due to the typically large mass of the object when compared with that of the UAV, approaching or landing on the object during an upward heave phase can result catastrophic damage and/or loss of the UAV.

It is an aim of the present invention to address one or more of the problems described above, or discussed elsewhere, or to at least provide an alternative solution.

### SUMMARY

According to a first aspect of the present invention, there is provided a landing platform assembly for landing an aerial vehicle thereon, the landing platform assembly comprising: a platform; an actuator arrangement connected to the platform and configured to adjust the orientation of the platform; and a processor configured to: receive orientation information from the aerial vehicle during a landing procedure; and operate the actuator arrangement to adjust the orientation of the platform based on the received orientation information from the aerial vehicle.

In one example, the landing platform assembly may be for landing an aerial vehicle on a vehicle or float arrangement on which the landing platform assembly is providable

In one example, the processor is configured to: operate the actuator arrangement to adjust the orientation of the platform to correspond with an angle of the aerial vehicle during the landing procedure determined based on the received orientation information from the aerial vehicle.

In one example, the processor is configured to: operate the actuator arrangement to adjust the orientation of the platform to correspond with a plane of the aerial vehicle during the landing procedure determined based on the received orientation information from the aerial vehicle.

In one example, the actuator arrangement is configured to adjust the orientation of the platform in four or six degrees of freedom.

In one example, the actuator arrangement comprises one or more hydraulic actuators.

In one example, the landing platform assembly comprises an electromagnetic docking arrangement configured to magnetically attract the aerial vehicle, thereby to dock the aerial vehicle at the platform. The electromagnetic docking arrangement may be an electromagnetic locking arrangement.

In one example, the electromagnetic docking arrangement is operable to attract the aerial vehicle to the platform prior to the aerial vehicle landing at the platform.

In one example, the landing platform assembly comprises a charging arrangement configured to provide electrical charging power to the aerial vehicle at the platform.

In one example, the charging arrangement comprises one or more induction chargers.

In one example, the landing platform assembly comprises a platform position indicating element. The platform position indicating element may otherwise be referred to as a platform position indicating means. The platform indicating element may be provided at the platform. The platform indicating element may be provided at, or on, a surface of the platform.

In one example, the platform position indicating element is a QR code, an infrared (IR) beacon, an infrared (IR) transmitter, radio frequency (RF) transmitter and/or a GPS transmitter. The platform position indicating element may be provided by any other inertial measurement unit transmitter, or inertial measurement unit sensor.

In one example, the processor is configured to: operate the actuator arrangement to adjust the orientation of the platform to maintain a horizontal orientation during an approach procedure of the aerial vehicle; and operate the actuator arrangement to adjust the orientation of the platform based on the received orientation information from the aerial vehicle during a landing procedure of the aerial vehicle.

In one example, the landing platform assembly is configured to be provided at, or on, a vehicle or float arrangement.

In one example, the vehicle is an aircraft, ground-based craft, or watercraft. In one example, the float arrangement is a buoy, pontoon, or the like.

In one example, the aerial vehicle is an unmanned aerial vehicle (UAV).

According to a second aspect of the present invention, there is provided a vehicle or float arrangement comprising the landing platform assembly according to the first aspect of the present invention.

According to a third aspect of the present invention, there is provided a system comprising: the landing platform assembly, vehicle, or float arrangement, according to the first aspect or second aspect of the present invention; and an aerial vehicle configured to transmit orientation information to the processor of the landing platform assembly.

According to a fourth aspect of the present invention, there is provided a method of landing an aerial vehicle, the method comprising: receiving orientation information from the aerial vehicle; and operating an actuator arrangement connected to a platform to adjust the orientation of the platform based on the received orientation information from the aerial vehicle.

In one example, the method is a method of landing an aerial vehicle on a vehicle or float arrangement.

According to a fifth aspect of the present invention, there is provided a landing system for landing an aerial vehicle at a target location, the landing system comprising: a processor assembly configured to: receive information related to variation in vertical displacement of the target location over time; determine a downward heave phase of the target location based on the received information; control the aerial vehicle to land at the target location during the downward heave phase.

In one example, the processor assembly is configured to: control the aerial vehicle to land at the target location at a point of minimum vertical displacement during the downward heave phase.

In one example, the processor assembly is configured to: receive information related to at least two oscillations in vertical displacement of the target location over time.

In one example, the processor assembly is configured to: determine a point of maximum vertical displacement of the target location.

In one example, the target location is a surface of a platform for landing the aerial vehicle thereon.

In one example, a transmitter is provided at the target location for transmitting information related to variation in vertical displacement of the target location over time, and the aerial vehicle comprises a receiver for receiving the information, optionally wherein the transmitter is an infrared, IR, transmitter, radio frequency, RF, transmitter and/or GPS transmitter and the receiver is an IR receiver, RF receiver and/or GPS receiver.

In one example, the transmitter is provided at a vehicle or float arrangement and the receiver is provided at the aerial vehicle.

In one example, the processor assembly comprises: a first processor provided at the target location; and a second processor provided at the aerial vehicle.

In one example, the first processor is provided at a vehicle or float arrangement.

In one example, the first processor is configured to: receive the information related to variation in vertical displacement of the target location over time; determine the downward heave phase of the target location based on the received information; and provide information relating to the downward heave phase to the second processor.

In one example, the second processor is configured to: control the aerial vehicle to land at the target location during the downward heave phase.

In one example, the first processor is configured to: transmit the information related to variation in vertical displacement of the target location over time, and the second processor is configured to: receive the information related to variation in vertical displacement of the target location over time; determine the downward heave phase of the target location based on the received information; and control the aerial vehicle to land at the target location during the downward heave phase.

In one example, the information related to variation in vertical displacement of the target location over time is IR information, RF information and/or GPS information.

In one example, the target location is provided at a vehicle or float arrangement. In one example, the vehicle is a watercraft, for example a ship, boat, or other vessel.

In one example, the aerial vehicle is an unmanned aerial vehicle (UAV).

According to a sixth aspect of the present invention, there is provided a vehicle, float arrangement, and/or aerial vehicle comprising the landing system according to the fifth aspect of the present invention.

In one example, the vehicle is an aircraft, ground-based craft, or watercraft, for example a ship, boat, or other vessel.

According to a seventh aspect of the present invention, there is provided a system comprising: the landing system according to the fifth aspect of the present invention; and an aerial vehicle and/or a vehicle or float arrangement.

According to an eighth aspect of the present invention, there is provided a method of landing an aerial vehicle at a target location, the method comprising: receiving information related to variation in vertical displacement of the target location over time; determining a downward heave phase of the target location based on the received information; controlling the aerial vehicle to land at the target location during the downward heave phase.

In one example, the target location may be provided at, or may be, a vehicle or float arrangement.

Features of one or more of the above aspects may be combined with features of any one or more other above aspects, as desired or as appropriate.

### BRIEF DESCRIPTION OF THE FIGURES

Embodiments of the invention will now be described by way of example only with reference to the figures, in which:
Figure 1 shows a landing platform assembly in a first orientation;
Figure 2 shows the landing platform assembly of Figure 1 in a second orientation;
Figure 3 shows a landing pad of the landing platform assembly;
Figure 4 shows a vehicle or float arrangement;
Figure 5 shows a system;
Figure 6 shows general methodology principles;
Figure 7 shows a landing system;
Figure 8 shows a plot of variation in vertical displacement of a target location;
Figure 9 shows stages of a landing procedure;
Figure 10 shows a vehicle, float arrangement, and/or aerial vehicle;
Figure 11 shows a system; and
Figure 12 shows general methodology principles.

### DETAILED DESCRIPTION

In summary, a landing platform assembly and landing system are described herein. In contrast to prior art approaches, the landing platform assembly is configured to adjust orientation of a platform based on received orientation information from an aerial vehicle during an approach or landing procedure. Advantageously, in this way, the platform can be oriented to facilitate improved landing of the aerial vehicle. Furthermore, the landing system controls aerial vehicle landing at a target location during a downward heave phase, which advantageously reduces risk of damage to the aerial vehicle. It will be appreciated from the description which follows that features of the landing platform assembly and landing system may be combined, in a synergistic manner, to improve the overall landing procedure of an aerial vehicle at a target location.

In the specification herein, an aerial vehicle, and its operation and interaction with the landing platform assembly and landing system, is described. In highly advantageous embodiments, the aerial vehicle is an unmanned aerial vehicle (UAV). Using the landing platform assembly and/or landing system to land a UAV is highly advantageous. A UAV may be more susceptible to sudden changes in orientation, for example due to gusts of wind. Furthermore, a UAV may make sudden orientation changes by operation of a propulsion system thereof. Furthermore, a UAV may be lightweight, and thus susceptible to high levels of damage if it were to collide with a target location or platform (for example during an upward heave phase). Additionally, the landing platform assembly and landing system described herein may be operable without user interaction, and as a UAV may not require user control, an improved landing procedure which does not require user control or interaction may be provided. For avoidance of doubt, a UAV may be used in any of the embodiments of the landing platform assembly or landing system described below. The UAV may otherwise be referred to as a "drone" or a "remotely piloted aircraft system (RPAS)".

In other embodiments, the aerial vehicle may be an aircraft, for example a rotorcraft such as a helicopter. An improved landing procedure may thus be provided by the landing platform assembly and landing system, improving pilot and/or passenger safety and reducing potentially highly costly damage to the aerial vehicle.

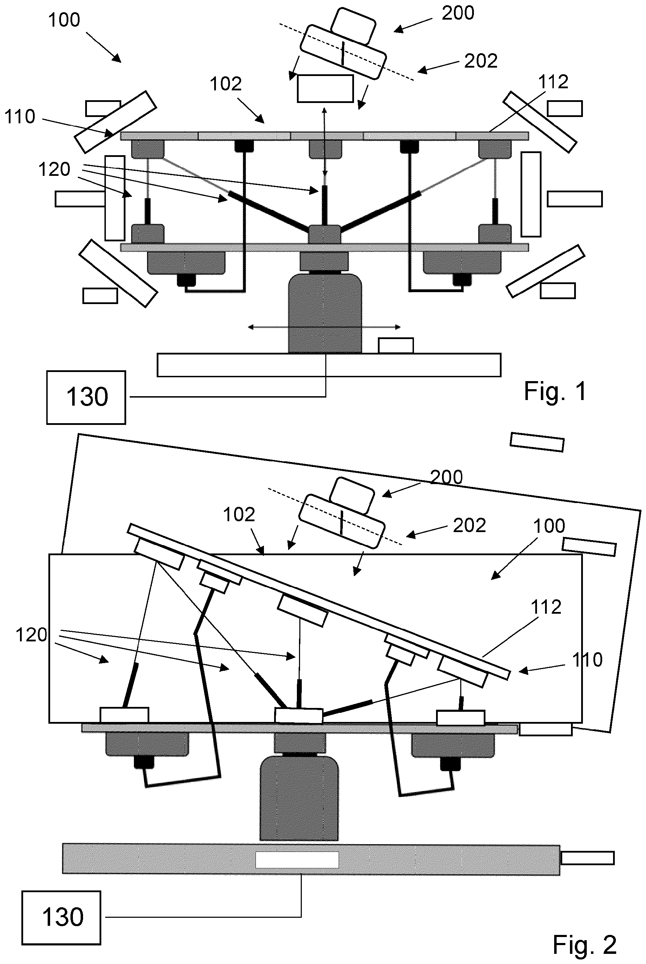

Referring to Figures 1 and 2, a landing platform assembly 100 is shown. The landing platform assembly 100 is for landing an aerial vehicle 200 thereon. The landing platform assembly 100 may be for landing the aerial vehicle 200 at a target location 102 at which the landing platform assembly 100 is providable. The target location may be provided at a vehicle or float arrangement. That is, the target location may be a platform which is provided at the vehicle or float arrangement. The float arrangement may be a buoy, or other floating platform.

The landing platform assembly 100 comprises a platform 110. The landing platform assembly 100 comprises an actuator arrangement 120. The actuator arrangement 120 is connected to the platform 110. The actuator arrangement 120 is configured to adjust the orientation of the platform 110.

The landing platform assembly 100 comprises a processor 130. The processor 130 is configured to receive orientation information from the aerial vehicle 200 during a landing procedure. The processor 130 is configured to operate the actuator arrangement 120 to adjust the orientation of the platform 110 based on the received orientation information from the aerial vehicle 200.

Advantageously, in this way, information from the aerial vehicle 200 can be used to adjust the orientation of the platform 110. This is in contrast to prior art approaches, some of which look to maintain a horizontal platform orientation irrespective of operation or orientation of the aerial vehicle. By adjusting the orientation of the platform 110 based on received orientation from the aerial vehicle 200, an adaptive approach is provided, where the platform orientation can be controlled based on orientation information from the aerial vehicle 200. This improves safety of the landing procedure, ensures the aerial vehicle 200 lands in the correct position, and furthermore reduces risk of loss or damage of the aerial vehicle 200.

In the specification herein, the term "landing procedure" is used. The landing procedure is the procedure or part of the aerial vehicle 200 flight operation during which the aerial vehicle 200 comes into land. For avoidance of doubt, in some examples, this may not be operationally distinct from any other part of the aerial vehicle flight. That is, the aerial vehicle 200 may not be specially configured in a landing mode or other specific configuration for landing. The landing procedure may thus simply be performed over a time period during which the aerial vehicle 200 is moving toward the platform to land thereon, including the time at which the aerial vehicle 200 lands on the platform 110. That is, the landing procedure may be a time of the aerial vehicle flight when the aerial vehicle 200 is at or less than a threshold distance from the platform 110, or at or less than a threshold time from landing at the platform 110. Alternatively, in other examples, the aerial vehicle 200 may be configured in a landing mode for performing the landing procedure. The landing procedure may then be performed over a time period from which the aerial vehicle 200 is configured in a landing mode, to perform the landing procedure, and terminate once the aerial vehicle 200 has landed at the platform 110.

The landing procedure may be distinct from an approach procedure. In an approach procedure, the aerial vehicle 200 may be moving toward the landing platform assembly 100, before commencing the landing procedure at a time period or distance (which may be a predetermined period or distance) from the landing platform assembly 100. Alternatively, the landing procedure and approach procedure may overlap, partially or completely. That is, the landing procedure and approach procedure may be the same procedure.

In the specification herein, the term "orientation" is used, in relation to the platform 110 and the aerial vehicle 200. Persons of skill in the art will appreciate that the term orientation may be the same as "attitude", including roll angle, pitch angle, and yaw angle. Orientation may be defined by angular displacement, which may be angular displacement from a horizontal orientation.

The processor 130 is configured to operate the actuator arrangement 120 to adjust the orientation of the platform 110 to correspond with an angle of the aerial vehicle during the landing procedure determined based on the received orientation information from the aerial vehicle 200. That is, the orientation of the platform 110 can be adjusted to correspond with, or match, the angle of the aerial vehicle 200. The orientation of the platform 110 may be adjusted so that a surface 112 (which may be an upper surface 112) of the platform 110 is parallel with a lateral plane of the aerial vehicle 200. The angle may otherwise be referred to as the landing angle. The angle may be an angle between a lateral plane 202 of the aerial vehicle 200 and the horizontal plane.

As shown in Figure 1 the aerial vehicle 200 approaches the surface 112 of the platform 110. The platform 110 orientation does not correspond with the angle (e.g., the landing angle) of the aerial vehicle 200. In this example, the platform 110 is actuated by the actuator arrangement 120 to maintain horizontal. As shown in Figure 2, during the landing procedure, orientation information is provided from the aerial vehicle 200 to the processor 130. The processor 130 receives the orientation information from the aerial vehicle 200. The processor 130 operates (or provides a control input to operate) the actuator arrangement 120 to adjust the orientation of the platform 110 to correspond with the angle of the aerial vehicle 200. This can be seen in Figure 2, where the surface 112 of the platform 110 is parallel with a lateral plane 202 of the aerial vehicle 200. In this way, the landing procedure of the aerial vehicle 200 is improved, and risk of damage or loss of the aerial vehicle 200 is reduced. Particular, in high wind conditions, it may not be possible for the aerial vehicle 200 to approach the platform 110 whilst maintaining a horizontal orientation, and may instead approach at an angle to the horizontal. The present landing platform assembly 100 can account for the orientation of the aerial vehicle 200, as described above.

It will be apparent from the above that the processor 130 may be configured to operate the actuator arrangement 120 to adjust the orientation of the platform 110 to maintain a horizontal orientation during an approach procedure of the aerial vehicle 200, and the processor 130 may be configured to operate the actuator arrangement 120 to adjust the orientation of the platform 110 based on the received orientation information from the aerial vehicle 200 during a landing procedure of the aerial vehicle 200.

The actuator arrangement 120 is configured to adjust the orientation of the platform 110 in multiple degrees of freedom. In the illustrated example, the actuator arrangement 110 is configured to adjust the orientation of the platform 110 in six degrees of freedom, including pitch, roll, heave and yaw. In other examples, the actuator arrangement 120 is configured to adjust the orientation of the platform 110 in four degrees of freedom. In this way, the landing procedure is simplified, and safety is improved.

The actuator arrangement 120 comprises one or more hydraulic actuators. Advantageously, hydraulic actuators are simple, inexpensive, strong, have high force capabilities, and importantly are operable to respond rapidly to input to adjust the orientation of the platform 110. In particular, sudden changes in orientation of the aerial vehicle 200 can be accounted for by using hydraulic actuators.

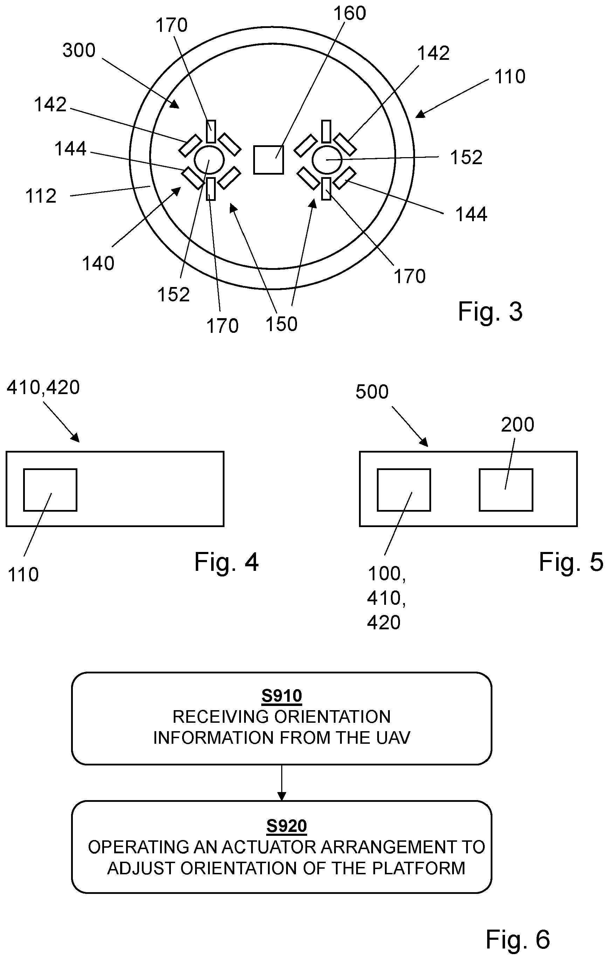

Referring to Figure 3, a landing pad 300 is shown. The landing pad is provided in, or at, the surface 112 of the platform 110. The landing platform assembly 100 comprises an electromagnetic docking arrangement 140. The electromagnetic docking arrangement 140 may be provided in the landing pad 300. The electromagnetic docking arrangement 140 may be provided completely, or in part, at the platform 110. The electromagnetic docking arrangement 140 is configured to magnetically attract the aerial vehicle 200, thereby to dock the aerial vehicle 200 at the platform 110. Advantageously, this may improve the landing procedure, by ensuring the landing aerial vehicle lands on the platform 110 at the correct location, which may be a location suitable for charging.

The electromagnetic docking arrangement 140 comprises one or more negative electromagnet portions 142 and one or more positive electromagnet portions 144.

The electromagnetic docking arrangement 140 is operable to attract the aerial vehicle 200 to the platform 110 prior to the aerial vehicle 200 landing at the platform 110. Advantageously, in this way, the aerial vehicle does not need to complete the final landing approach with high accuracy as it will be attracted by the electromagnetic docking arrangement 140 to the correct location. This may reduce aerial vehicle power or fuel consumption during the landing procedure. The aerial vehicle 200 may be formed from, or comprise, magnetic materials or magnetic components.

The landing platform assembly 100 comprises a charging arrangement 150. The charging arrangement 150 may be provided in the landing pad 300. The charging arrangement 150 is configured to provide electrical charging power to the aerial vehicle 200. Advantageously, when the aerial vehicle 200 lands at the platform 110 (e.g., at the landing pad 300), it can then be provided with charging power for charging the aerial vehicle 200.

The charging arrangement 150 comprises one or more induction chargers 152. The aerial vehicle 200 comprises a corresponding induction charging arrangement. In this way, the aerial vehicle 200 can be wirelessly charged. The induction chargers 152 of the charging arrangement 150 may be provided by copper induction charging pads.

The landing platform assembly 100 comprises a platform position indicating element 160, or platform position indicating means, provided at the platform 110. The platform position indicating element 160 may be provided in the landing pad 300. In this way, the aerial vehicle 200 can establish the location of the platform 110, and in particular the landing pad 300, for landing thereat.

The platform position indicating element 160 may be in the form of a QR code and/or an infrared (IR) beacon. The aerial vehicle 200 may be provided with a platform position indicating element reader, for reading or monitoring the element 160. The aerial vehicle 200 may use this information to guide the aerial vehicle 200 toward the platform position indicating element 160 during the landing procedure.

The platform position indicating means may also be provided by a GPS system. That is, the landing platform assembly 100 may comprise a GPS transmitter for transmitting GPS information or GPS data, and the aerial vehicle 200 may comprise a GPS receiver for receiving the GPS information or GPS data from the transmitter. The platform position indicating means may also be provided by any other inertial measurement unit system, transmitter, or sensor.

The landing platform assembly 100 further comprises one or more attachment points 170. The attachment points 170 are provided at the platform 110. In particular, the attachment points 170 are provided at the landing pad 300. The aerial vehicle 200 may attach to the platform 110 at the attachment points 170. In particular, one or more legs or struts of the aerial vehicle 200 may attach to the attachment points 170.

In an advantageous example, the landing platform assembly 100 may be partly enclosed within the vehicle or float arrangement, with only the platform 110 thereof exposed at a surface of the vehicle or float arrangement. In this way, the landing platform assembly 100 is protected from the elements, thereby reducing maintenance issues.

As above, and applicable to the landing platform assembly 100, the aerial vehicle 200 may be a UAV 200. This is highly advantageous, for the reasons described above.

Referring to Figure 4, a vehicle 410 or float arrangement 420 is shown. The vehicle 410 or float arrangement 420 comprises the landing platform assembly 100, as described herein. As above, the float arrangement may be a buoy, or other floating platform. Furthermore, as above, the vehicle 410 may be a watercraft, ground-based craft, or aircraft.

Referring to Figure 5, a system 500 is shown. The system 500 comprises the landing platform assembly 100, vehicle 410, or float arrangement 420, as described herein. The system 500 further comprises an aerial vehicle (e.g., aerial vehicle 200) configured to transmit orientation information to the processor 130 of the landing platform assembly 100. The aerial vehicle 200 may be a UAV 200. Furthermore, as above, the vehicle 410 may be a watercraft, ground-based craft, or aircraft.

Referring to Figure 6, a method of landing an aerial vehicle at a target location is shown. Step S610 comprises receiving orientation information from the aerial vehicle. Step S620 comprises operating an actuator arrangement connected to a platform to adjust the orientation of the platform based on the received orientation information from the aerial vehicle. The aerial vehicle may be a UAV.

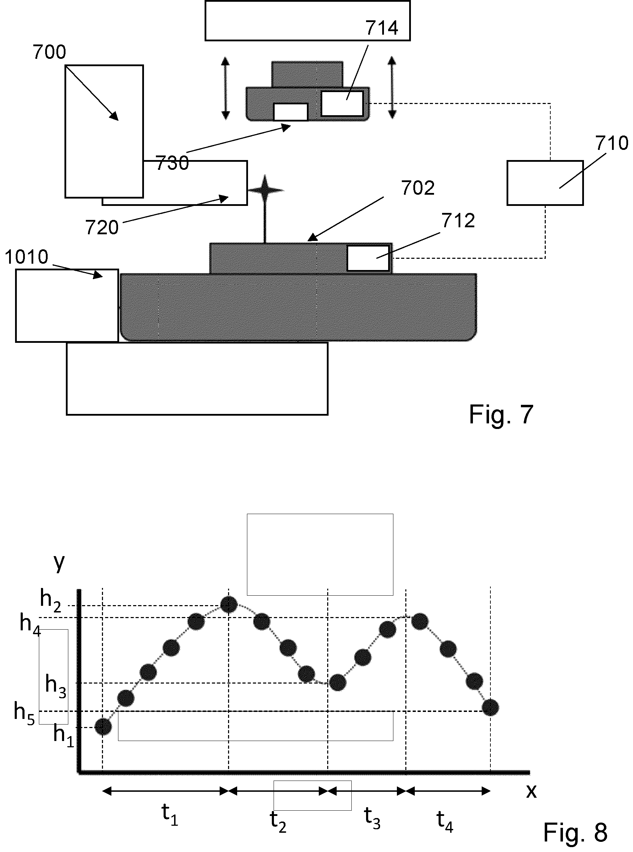

Referring to Figure 7, a landing system 700 is shown. The landing system 700 is for landing an aerial vehicle 200 at a target location 702. The landing system 700 comprises a processor assembly 710. The processor assembly 710 is configured to receive information related to variation in vertical displacement of the target location 702 over time. The processor assembly 710 is configured to determine a downward heave phase of the target location 702 based on the received information. The processor assembly 710 is configured to control the aerial vehicle 200 at the target location 702 during the downward heave phase.

Advantageously, by landing during the downward heave phase, risk of damage or loss of the aerial vehicle 200 is reduced. Upward heave can result in collision of the aerial vehicle 200 with the landing site, which may result in catastrophic potential damage to the aerial vehicle 200. By landing during the downward heave phase, this risk is eliminated.

The target location 702 may be, or be provided by, a platform (for example platform 110 described in relation to the landing platform assembly 100 above). That is, the target location 702 may be a surface of a platform 110 for landing the aerial vehicle 200 thereon. In Figure 7, the platform is indicated at 110, and the surface thereof indicated at 112. The target location 702 may be at the landing pad 300 of the landing platform assembly 100. Additionally, or alternatively, the target location may be a surface of a vehicle, platform (for example, a floating platform), or float arrangement. As above, the float arrangement may be a buoy, or other floating platform. That is, the target location may not comprise a landing platform assembly 100. In the example illustrated in Figure 7, the target location 702 is provided at a surface of a vehicle 1010, in particular a watercraft 1010.

The term "heave" is well understood in the art. Heave is the linear vertical (up/down) motion of a vehicle or other object. Heave may apply in particular to a ship, float arrangement, or other water-based object. In this context, heave may be caused by wave motion. Heave may also be found in land craft, or platforms provided on land craft, for example a land craft traversing bumps, hills or variations in terrain. Heave may also be found in aircraft, for example in hovering aircraft the altitude of which may vary over time, which may be due to environmental conditions such as gusts of wind.

Referring to Figure 8, variation in vertical displacement of the target location 702 over time is shown. This may be the variation in vertical displacement of a vehicle or platform on which the aerial vehicle 200 is to land. Time is plotted on the x axis, and vertical displacement (e.g., height, or heave displacement) is plotted on the y axis. As shown in the figure, the target location heaves upwards over a first time period t₁ from a minimum vertical displacement h₁ to a maximum vertical displacement h₂. The time period t₁ may be referred to as an upward heave phase. The target location heaves downwards over a second time period t₂ from the maximum vertical displacement h₂ to a first intermediate vertical displacement h₃. The time period t₂ may be referred to as a downward heave phase. The target location then heaves upwards again over a time period t₃ from the first intermediate vertical displacement h₃ to a second intermediate vertical displacement h₄. The time period t₃ may be referred to as an upward heave phase. The target location then heaves downwards again over a time period t₄ from the second intermediate vertical displacement h₄ to a third intermediate vertical displacement h₅. The time period t₄ may be referred to as a downward heave phase.

The processor assembly 710 may be configured to receive the variation in vertical displacement information described above, or determine the variation in vertical displacement information described above. The processor assembly 710 may be configured to receive or determine said information during a flight phase, which may occur during returning from a mission or operation. In this way, when the aerial vehicle 200 reaches the vicinity to commence landing, the downward heave phase may be determined such that landing can be performed without delay.

It will be appreciated from the above that the downward heave phase is any phase, or time period, during which the target location (e.g., platform, or vehicle) undergoes downward heave, which is a decrease in vertical displacement.

The processor assembly 710 is configured to control the aerial vehicle 200 to land at the target location 702 at a point of minimum vertical displacement during the downward heave phase. In relation to Figure 8, this may correspond with the end time of the second time period t₂ or end time of the fourth time period t₄. In this way, the duration of the landing procedure can be maximised improving landing safety.

The processor assembly 710 is configured to receive information related to at least two oscillations in vertical displacement of the target location over time. In this way, improved information relating to the maximum and minimum vertical displacement can be established.

The processor assembly 710 is configured to determine a point of maximum vertical displacement of the target location. In relation to Figure 8, this may correspond with vertical displacement h₂. This may inform the determination of the downward heave phase, which follows the maximum vertical displacement of the target location 702. Following determining a point of maximum displacement (which may be the time at which the maximum displacement occurs, or the height itself), the aerial vehicle 200 approaches the target location 702 to land thereat.

Referring back to Figure 7, the landing system 700 comprises a transmitter 720 and a receiver 730. In this example, the transmitter 720 is provided at the target location 702. The transmitter 720 is for transmitting information related to variation in vertical displacement of the target location over time. The transmitter 720 may be configured to transmit information related to variation in vertical displacement of the target location over time. In this example, the receiver 730 is comprised in, or provided at, the aerial vehicle 200. The receiver 730 is for receiving the information from the transmitter 720. The received 730 may be configured to receive the information from the transmitter 720. The transmitter 720 may be provided by any inertial measurement unit, or any inertial measurement sensor.

The transmitter 720 may be an infrared (IR) transmitter and the receiver 730 may be an IR receiver. The transmitter 720 may be a radio frequency (RF) transmitter and the receiver 730 may be an RF receiver. The transmitter 720 may be a global positioning system (GPS) transmitter (e.g., a GPS data transmitter) and the receiver 730 may be a GPS receiver (e.g., a GPS data receiver). The landing system 700 may comprise one or more such transmitters 720 and receivers 730.

The processor assembly 710 comprises a first processor 712 and a second processor 714. In this example, the first processor 712 is provided at the target location 702, and the second processor 714 is provided at the aerial vehicle 200. That is, the first processor 712 may be provided at the vehicle 1010.

The first processor 712 is configured to receive information related to variation in vertical displacement of the target location 702 over time. The first processor 712 is configured to determine the downward heave phase of the target location 702 based on the received information. The first processor 712 is configured to provide information relating to the downward heave phase to the second processor 714. In this way, the aerial vehicle 200 receives information relating to the downward heave phase, which may thus inform the landing procedure.

Applicable to the above, the information related to variation in vertical displacement of the target location over time may be IR information, RF information, or GPS information, or a combination thereof.

The target location 702 may be provided at the vehicle 1010 or at a float arrangement. That is, the target location 702 may be a platform (e.g., platform 110), which is provided at the vehicle 1010 or float arrangement. As above, the float arrangement may be a buoy, or other floating platform.

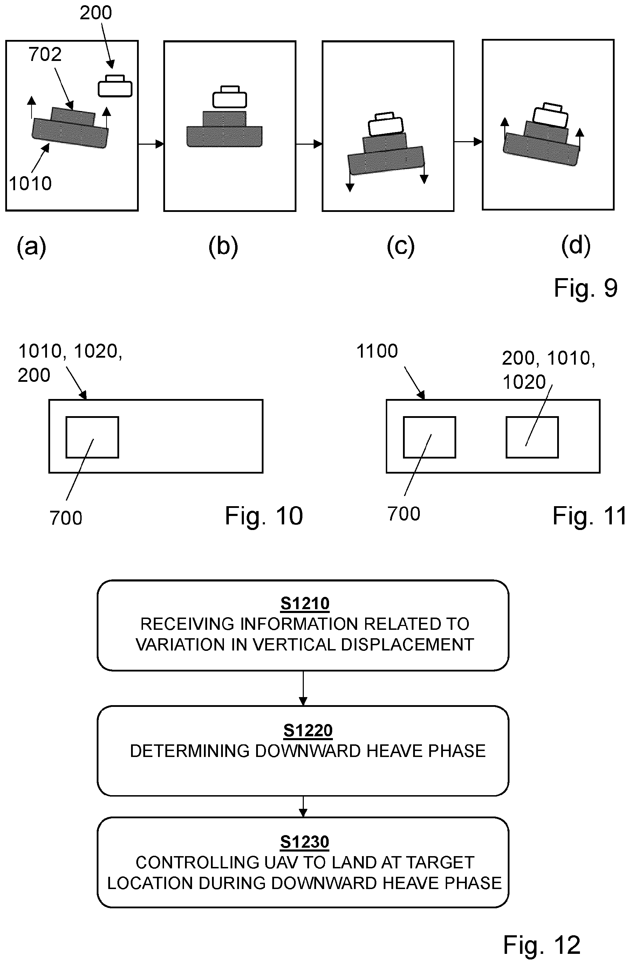

Referring to Figure 9, an example of stages of a landing procedure are shown. In Figure 9, the target location 702 is a surface of the vehicle 1010.

As shown in Figure 9(a), the aerial vehicle 200 approaches the target location 702 during an approach procedure. The vehicle 1010 is in an upward heave phase.

As shown in Figure 9(b), the aerial vehicle 200 commences the landing procedure. This may be due to the aerial vehicle 200 receiving information related to variation in vertical displacement of the target location over time, or due to the aerial vehicle 200 determining the downward heave phase of the target location, or being provided with information related to the downward heave phase of the target location. The landing procedure may additionally, or alternatively, may be as described elsewhere in this specification.

As shown in Figure 9(c), the aerial vehicle 200 landing procedure is performed, wherein the aerial vehicle 200 lands at the target location 702 during the downward heave phase.

As shown in Figure 9(d), the aerial vehicle 200 is landed at the target location, and the target location exhibits an upward heave. The aerial vehicle 200 is safely landed at the target location (e.g., the landing procedure is complete), and thus the upward heave does not present a risk to the aerial vehicle 200.

As above, and applicable to the landing system 700, the aerial vehicle 200 may be a UAV 200. This is highly advantageous, for the reasons described above.

Referring to Figure 10, a vehicle 1010, float arrangement 1020, and/or aerial vehicle 200 is shown. The vehicle 1010, float arrangement 1020 and/or aerial vehicle 200 comprises the landing system 700, as described herein. As above, the float arrangement may be a buoy, or other floating platform. The aerial vehicle 200 may be a UAV 200. Furthermore, as above, the vehicle 1010 may be a watercraft, ground-based craft, or aircraft.

Referring to Figure 11, a system 1100 is shown. The system 1100 comprises the landing system 700, as described herein. The system 1100 further comprises an aerial vehicle (e.g., aerial vehicle 200) and/or a vehicle 1010 or float arrangement 1020. The aerial vehicle 200 may be a UAV 200.

Referring to Figure 12, a method of landing an aerial vehicle at a target location is shown. Step S1210 comprises receiving information related to variation in vertical displacement of the target location over time. Step S1220 comprises determining a downward heave phase of the target location based on the received information. Step S1230 comprises controlling the aerial vehicle to land at the target location during the downward heave phase. The aerial vehicle may be a UAV.

## Claims

1. A landing platform assembly (100) for landing an aerial vehicle (200) thereon, the landing platform assembly comprising:
a platform (110);
an actuator arrangement (120) connected to the platform (110) and configured to adjust the orientation of the platform (110); and
a processor (130) configured to:
receive orientation information from the aerial vehicle (200) during a landing procedure; and
operate the actuator arrangement (120) to adjust the orientation of the platform (110) based on the received orientation information from the aerial vehicle (200).

2. The landing platform assembly (100) according to claim 1, wherein the processor (130) is configured to operate the actuator arrangement (120) to adjust the orientation of the platform (110) to correspond with an angle of the aerial vehicle (200) during the landing procedure determined based on the received orientation information from the aerial vehicle.

3. The landing platform assembly (100) according to claim 1 or claim 2, wherein the actuator arrangement (120) is configured to adjust the orientation of the platform (110) in four or six degrees of freedom.

4. The landing platform assembly (100) according to any one of the preceding claims, wherein the actuator arrangement (120) comprises one or more hydraulic actuators.

5. The landing platform assembly (100) according to any one of the preceding claims, comprising an electromagnetic docking arrangement (140) configured to magnetically attract the aerial vehicle, thereby to dock the aerial vehicle at the platform.

6. The landing platform assembly (100) according to any one of the preceding claims, wherein the electromagnetic docking arrangement (140) is operable to attract the aerial vehicle to the platform prior to the aerial vehicle landing at the platform.

7. The landing platform assembly (100) according to any one of the preceding claims, comprising a charging arrangement (150) configured to provide electrical charging power to the aerial vehicle at the platform.

8. The landing platform assembly (100) according to claim 7, wherein the charging arrangement (150) comprises one or more induction chargers (152).

9. The landing platform assembly (100) according to any one of the preceding claims, comprising a platform position indicating element (160) provided at the platform.

10. The landing platform assembly (100) according to claim 9, wherein the platform position indicating element is a QR code, an infrared, IR, beacon, radio frequency, RF, transmitter, and/or a GPS transmitter.

11. The landing platform assembly (100) according to any one of the preceding claims, wherein the processor (130) is configured to:
operate the actuator arrangement (120) to adjust the orientation of the platform (110) to maintain a horizontal orientation during an approach procedure of the aerial vehicle (200); and
operate the actuator arrangement (120) to adjust the orientation of the platform (110) based on the received orientation information from the aerial vehicle (200) during a landing procedure of the aerial vehicle.

12. The landing platform assembly (100) according to any one of the preceding claims, wherein the landing platform assembly is configured to be provided at, or on, a vehicle (410) or float arrangement (420).

13. A vehicle (410) or float arrangement (420) comprising the landing platform assembly (100) according to any one of the preceding claims.

14. A system (500) comprising:
the landing platform assembly (100), vehicle (410), or float arrangement (420), according to any one of the preceding claims; and
an aerial vehicle (200) configured to transmit orientation information to the processor (130) of the landing platform assembly (100).

15. A method of landing an aerial vehicle (200) the method comprising:
receiving orientation information from the aerial vehicle (200); and
operating an actuator arrangement (120) connected to a platform (110) to adjust the orientation of the platform (110) based on the received orientation information from the aerial vehicle (200).
